# EUROPEAN PATENT APPLICATION

(11) **EP 3 506 036 A1**
(43) Date of publication of application: **03.07.2019**
(21) Application number: 18212651.6
(22) Date of filing: 14.12.2018
(51) Int. Cl.: G05B 19/408, A61C 13/08

(54) **CUTTING MACHINE**

(30) Priority: 14.12.2017 JP 2017239480
(71) Applicant: DGSHAPE Corporation, Hamamatsu-shi, Shizuoka 431-2103 (JP)
(72) Inventor: SAGISAKA, Yusuke, Hamamatsu-shi, Shizuoka, 431-2103 (JP); NAKANE, Kenta, Hamamatsu-shi, Shizuoka, 431-2103 (JP); KANJA, Tetsuya, Hamamatsu-shi, Shizuoka, 431-2103 (JP)
(74) Representative: Grünecker Patent- und Rechtsanwälte PartG mbB

(57) **Abstract**

A cutting machine of the present invention is a cutting machine capable of cutting only a single workpiece, and a controller thereof includes a storage, a data reader, a reconfigurator, and a cut controller. The storage stores cut data. The data reader reads out the cut data. The reconfigurator reconfigures the cut data so that when the read-out cut data includes a workpiece selection command, a first workpiece selection command is skipped. The cut controller cuts the workpiece based on the reconfigured cut data.

## Description

### BACKGROUND OF THE INVENTION

### Field of the Invention

The present invention relates to a cutting machine.

### Description of the Related Art

There are conventional cutting machines known in the art that are used to make artificial teeth, etc., by way of cutting, for example. Japanese Laid-Open Patent Publication No. 2017-94436, for example, discloses a cutting machine including a holder that holds a workpiece, a spindle (main shaft) for rotating a machining tool, a mechanism for three-dimensionally translating the holder and the spindle, and a mechanism for rotating the holder in two directions.

The cutting machine disclosed in Japanese Laid-Open Patent Publication No. 2017-94436 is a cutting machine that does not have the function of automatically cutting a plurality of workpieces by automatically replacing workpieces. On the other hand, there are cutting machines that have the function of automatically cutting a plurality of workpieces by automatically replacing workpieces, and there are cut data that are generated for such cutting machines. Such cut data includes workpiece selection commands for selecting workpieces. When one attempts to execute cut data including workpiece selection commands on a cutting machine that does not have a mechanism for automatically replacing workpieces, it is not possible to perform a cut process. In order to execute a cut process included in such cut data on a cutting machine that does not have a mechanism for automatically replacing workpieces, it is necessary to modify the cut data, e.g., by deleting workpiece selection commands.

### SUMMARY OF THE INVENTION

The present invention has been made in view of such a problem, and an object thereof is to provide a cutting machine that does not have a mechanism for replacing workpieces but is capable of performing a cut process when fed with cut data that includes workpiece selection commands.

A cutting machine disclosed herein is a cutting machine capable of cutting only a single workpiece, the cutting machine including: a main shaft having a spindle including a clamp that clamps a tool that cuts the workpiece; a holder member that holds the workpiece; a moving mechanism that moves the main shaft and the holder member relative to each other; and a controller. The controller includes a storage, a data reader, a reconfigurator, and a cut controller. The storage stores cut data. The data reader reads out the cut data. The reconfigurator reconfigures the read-out cut data. The cut controller controls the main shaft and the moving mechanism based on the reconfigured cut data. The reconfigurator reconfigures the cut data so that when the read-out cut data includes a workpiece selection command, a first workpiece selection command is skipped.

With the cutting machine, the first workpiece selection command is skipped, and it is therefore possible to start the cut process. Therefore, even with cut data including a workpiece selection command, it is possible to execute at least the first cut process.

Another cutting machine disclosed herein is a cutting machine capable of cutting only a single workpiece, the cutting machine including: a main shaft having a spindle including a clamp that clamps a tool that cuts the workpiece; a holder member that holds the workpiece; a moving mechanism that moves the main shaft and the holder member relative to each other; and a controller. The controller includes a storage, a data reader, a reconfigurator, and a cut controller. The storage stores cut data. The data reader reads out the cut data. The reconfigurator reconfigures the read-out cut data. The cut controller controls the main shaft and the moving mechanism based on the reconfigured cut data. The reconfigurator includes a selector and a modifier. The selector is configured so that when the read-out cut data includes a plurality of workpiece selection commands, any one or more workpiece selection command can be selected from among the plurality of workpiece selection commands so as to reconfigure the cut data so as to skip commands associated with the workpiece selection commands other than the selected workpiece selection commands. The modifier reconfigures the cut data so that the selected workpiece selection commands are skipped, and when two or more workpiece selection commands are selected, a pause command and a resume command for resuming a cut process when a predetermined resumption condition is met are added to each of commands that are associated with the second and subsequent workpiece selection commands.

With the other cutting machine, only the cut processes that are associated with the selected workpiece selection commands are executed, and the selected workpiece selection commands themselves are not executed. Therefore, even with cut data including workpiece selection commands, it is possible to select and execute intended cut processes.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. **1** is a perspective view of a cutting machine of one embodiment.
FIG. **2** is a perspective view showing a cutting machine with the door open.
FIG. **3** shows a III-III cross section of FIG. **1**.
FIG. **4** is a perspective view showing a configuration of a holder member, a rotation mechanism and a magazine.
FIG. **5** is a block diagram of a cutting machine according to a first embodiment.
FIG. **6** is a flow chart showing a cut process by the cutting machine of the first embodiment.
FIG. **7** is a block diagram of a cutting machine of a second embodiment.
FIG. **8** is a flow chart showing a cut process by the cutting machine of the second embodiment.
FIG. **9** is a block diagram of a cutting machine of a third embodiment.

### DETAILED DESCRIPTION OF THE PREFERRED EMBODIMENTS

Cutting machines according to embodiments of the present invention will now be described with reference to the drawings. Note that it is understood that the embodiments described herein are not intended to limit the present invention. Members and portions of like functions are denoted by like reference signs, and redundant descriptions will be omitted or shortened as necessary.

### (First Embodiment)

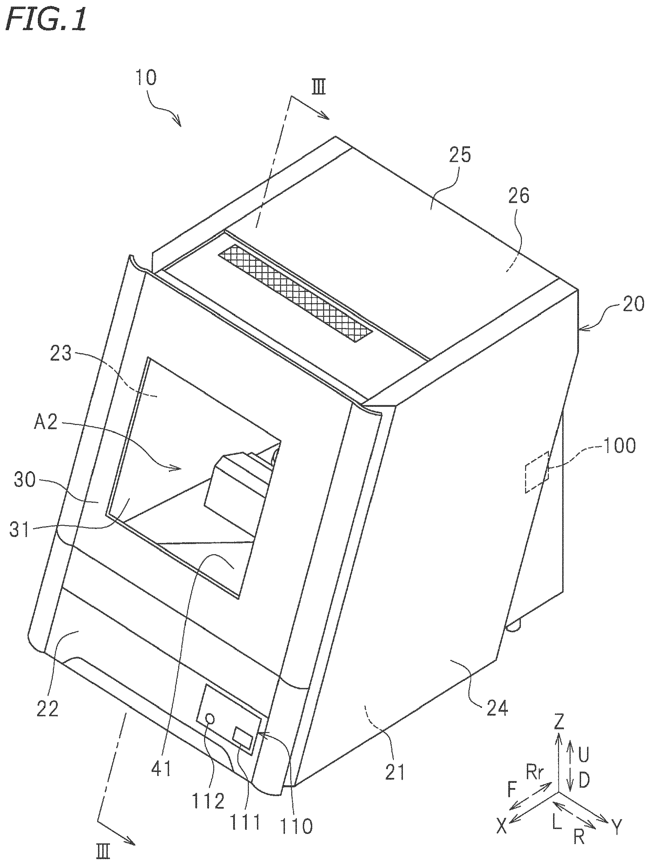

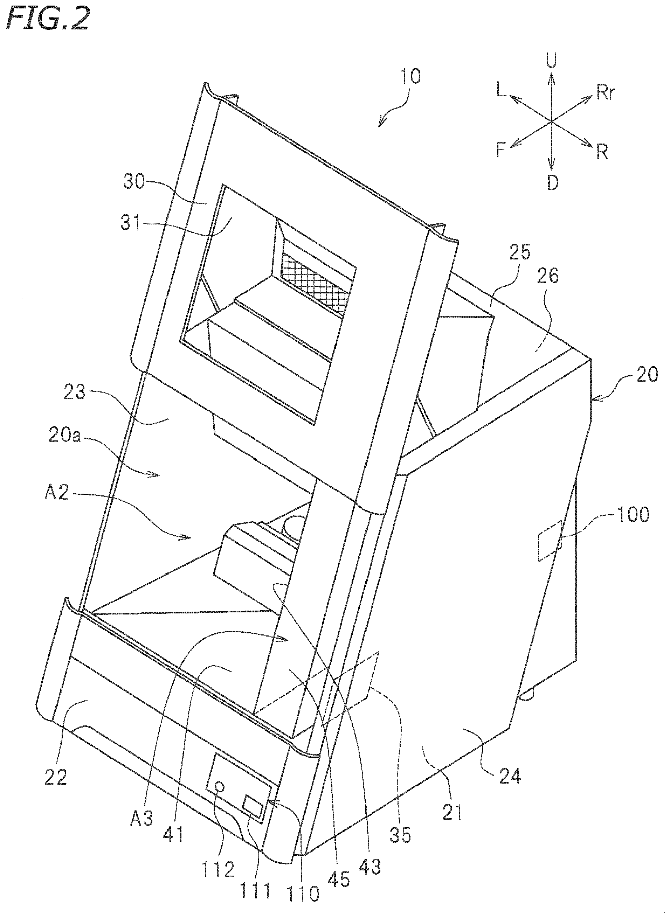

FIG. **1** is a perspective view of a cutting machine **10** of one embodiment. FIG. **2** is a perspective view showing the cutting machine **10** with a door **30** of FIG. **1** open. The terms "left", "right", "up" and "down", as used in the description below, refer to these directions as seen from the user being on the side of the door **30** of the cutting machine **10**. The direction from the user toward the cutting machine **10** will be referred to as "rear", and the opposite direction as "front". The designations F, Rr, L, R, U and D, as used in the figures, refer to front, rear, left, right, up and down, respectively. It is assumed that where the X axis, the Y axis and the Z axis are orthogonal to each other, the cutting machine **10** of the present embodiment is placed on a plane that is defined by the X axis and the Y axis. Herein, the X axis extends in the front-rear direction. The Y axis extends in the left-right direction. The Z axis extends in the up-down direction. Note however that these directions are defined merely for the purpose of discussion, and do not in any way limit how the cutting machine **10** is placed.

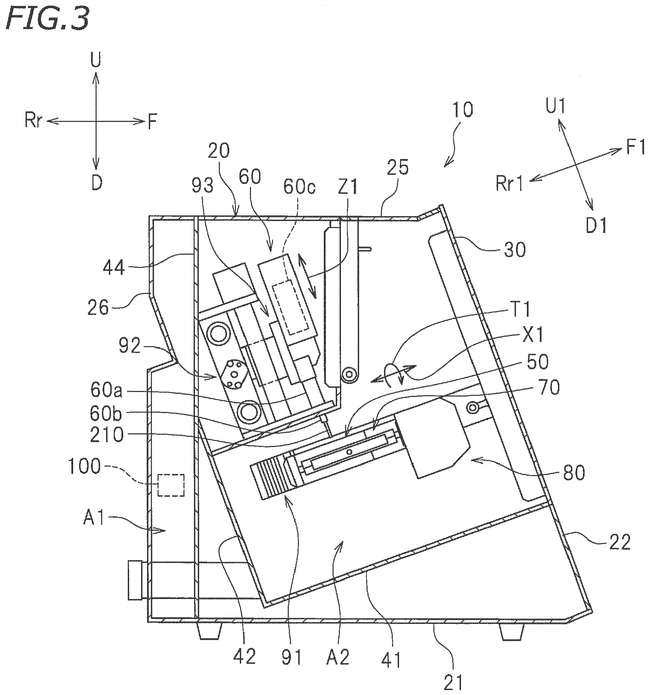

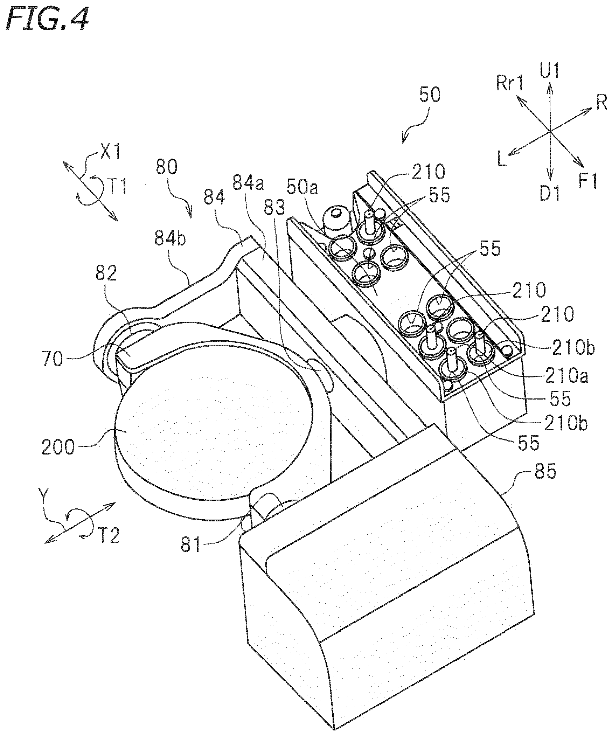

The cutting machine **10** of the present embodiment is a cutting machine of a type with which the user manually replaces a workpiece **200** (see FIG. **4**). That is, it is a cutting machine that does not include an automatic workpiece changer and is capable of cutting only a single workpiece. As shown in FIG. **1**, the cutting machine **10** is formed in a box shape. In the present embodiment, the cutting machine **10** includes a housing **20** and the door **30**. The housing **20** accommodates a holder member **70** (see FIG. **4**) that holds the workpiece **200**, a main shaft **60** (see FIG. **3**) that rotates a tool **210** (see FIG. **3**), etc. The housing **20** has a bottom surface wall **21**, a front surface wall **22**, a left side wall **23**, a right side wall **24**, a top surface wall **25**, and a back surface wall **26**. Each member of the housing **20** is formed from a steel plate, or the like. The bottom surface wall **21** is herein provided parallel to the XY plane. The bottom surface wall **21** forms the bottom surface of the entire cutting machine **10.** The left side wall **23** is connected to the left edge of the bottom surface wall **21.** The left side wall **23** extends in the Z direction from the left edge of the bottom surface wall **21.** The right side wall **24** is connected to the right edge of the bottom surface wall **21.** The right side wall **24** extends in the Z direction from the right edge of the bottom surface wall **21.** The back surface wall **26** is connected to the rear edge of the bottom surface wall **21**. The back surface wall **26** extends in the Z direction from the rear edge of the bottom surface wall **21**. The left edge and the right edge of the back surface wall **26** are connected to the rear edge of the left side wall **23** and the rear edge of the right side wall **24**, respectively. The top surface wall **25** is formed parallel to the bottom surface wall **21**, and is connected to the upper edge of the left side wall **23**, the upper edge of the right side wall **24** and the upper edge of the back surface wall **26**. The front surface wall **22** is connected to the front edge of the bottom surface wall **21**. The front surface wall **22** extends in an upper diagonal direction from the front edge of the bottom surface wall **21**. Specifically, it extends upward while being inclined rearward. The left edge of the front surface wall **22** is connected to the front edge of the left side wall **23**. The right edge of the front surface wall **22** is connected to the front edge of the right side wall **24**. The height of the front surface wall **22** is less than the left side wall **23** and the right side wall **24**. Therefore, an opening **20a** is formed on the front surface of the housing **20**. Thus, the housing **20** is a box-shaped member that accommodates the holder member **70**, the main shaft **60**, etc., and has the opening **20a**.

The door **30** is provided in the opening **20a** of the housing **20**. The door **30** can be opened and closed. Specifically, the door **30** is attached to the housing **20** so that the door **30** can slide in the up-down direction along the front edge of the left side wall **23** and the front edge of the right side wall **24**. As the door **30** slides in the up-down direction, the inside and the outside of the housing **20** communicate with each other through the opening **20a** on the front side of the housing **20**. Note that the door **30** herein opens and closes by sliding in the up-down direction, but it may be provided in various other embodiments, e.g., it may be opened and closed in the lateral direction. The door **30** is provided with a window **31**, through which the inside of the housing **20** can be seen.

As shown in FIG. **2**, a detector **35** for detecting the open/closed position of the door **30** is provided in the vicinity of the door **30**. The detector **35** includes a switch configured to be depressed by a portion of the door **30** when the door **30** is shut, for example. The detector **35** detects the open/closed position of the door **30** based on the depression of the switch. The detector **35** is a mechanical switch, for example. Note however that the detector **35** is not limited to such a switch, but a photoelectric sensor, a proximity sensor including a magnet, or the like, for example, can be also used.

The inside of the housing **20** is divided by internal walls into a plurality of areas. FIG. **3** shows a III-III cross section of FIG. **1**. As shown in FIG. **2** and FIG. **3**, a lower surface wall **41**, a rear wall **42**, a partition wall **43** and a rear partition wall **44** are provided as internal walls inside the housing **20**. The rear partition wall **44** is arranged close to the back surface wall **26** inside the housing **20**, and extends in the up-down direction. The rear partition wall **44** divides the inside of the housing **20** into the front-side area and the rear-side area. The rear-side space defined by the rear partition wall **44** forms a back-side area **A1**. A controller **100**, etc., are accommodated in the back-side area **A1**. The lower surface wall **41** and the rear wall **42** are arranged in the front-side space defined by the rear partition wall **44**. The lower surface wall **41** is connected vertical to the front surface wall **22** of the housing **20** at the upper edge of the front surface wall **22**. As described above, the front surface wall **22** is inclined rearward, and the lower surface wall **41** arranged vertical to the front surface wall **22** is also inclined with respect to the XY plane. Specifically, the lower surface wall **41** is inclined downward while extending in the front-to-rear direction. The rear wall **42** is connected vertical to the lower surface wall **41** at the rear edge of the lower surface wall **41**. As shown in FIG. **3**, the rear wall **42** extends in an upper diagonal direction from the connection with the lower surface wall **41** and is connected to the rear partition wall **44**. The lower surface wall **41**, the rear wall **42**, and a portion of the rear partition wall **44** that is above the rear wall **42** together form an internal space inside the housing **20**. The internal space is further divided into a process area **A2** and a control area **A3** by means of the partition wall **43**, which is arranged vertical to the lower surface wall **41**.

As shown in FIG. **2**, the internal space defined by the lower surface wall **41**, the rear wall **42** and the rear partition wall **44** is further divided left and right by the partition wall **43**. The left-side space is the process area **A2**, where the workpiece **200** is cut. The right-side space is the control area **A3** that accommodates a driver for controlling the rotation and movement of the holder member **70** and a magazine **50**, etc. A cover **45** is attached to the front surface of the control area **A3** for isolating the control area **A3** from the outside. The process area **A2** is larger than the control area **A3**.

As described above, the process area **A2** and the control area **A3** are inclined downward while extending rearward with respect to the X direction and the Z direction of the cutting machine **10**. Accordingly, in the process area **A2**, the direction vertical to the lower surface wall **41** will be referred to as the Z1 direction. The direction perpendicular to the front surface wall **22**, which is orthogonal to the lower surface wall **41**, will be referred to as the X1 direction. The X1 direction, the Y direction and the Z1 direction are orthogonal to each other. Moreover, for the X1 direction and the Z1 direction, which are orthogonal to each other, the front direction and the rear direction along the X1 direction will be denoted as F1 and Rr1, respectively, and the upper direction and the lower direction along the Z1 direction as U1 and D1, respectively. Note however that these directions are defined merely for the purpose of discussion, and do not in any way limit how the cutting machine **10** is placed.

As shown in FIG. **3**, the holder member **70**, a rotation mechanism **80**, the magazine **50**, the main shaft **60**, an X1 direction moving mechanism **91**, a Y direction moving mechanism **92** and a Z1 direction moving mechanism **93** are arranged inside the process area **A2**. FIG. **4** is a perspective view showing a configuration of the holder member **70**, the rotation mechanism **80** and the magazine **50**. As shown in FIG. **4**, in the present embodiment, the holder member **70** for holding the workpiece **200**, the rotation mechanism **80** for rotating the holder member **70**, and the magazine **50** accommodating bar-shaped tools **210** are assembled together.

The holder member **70** holds the workpiece **200**. Herein, the workpiece **200** is formed in a circular plate shape. The workpiece **200** is a material of an artificial tooth, for example. The holder member **70** is formed in a semicircular arc shape. In the present embodiment, the holder member **70** includes a screw (not shown), or the like, and the workpiece **200** is secured as the user tightens the screw, or the like. The number of workpieces **200** that the holder member **70** can hold is one.

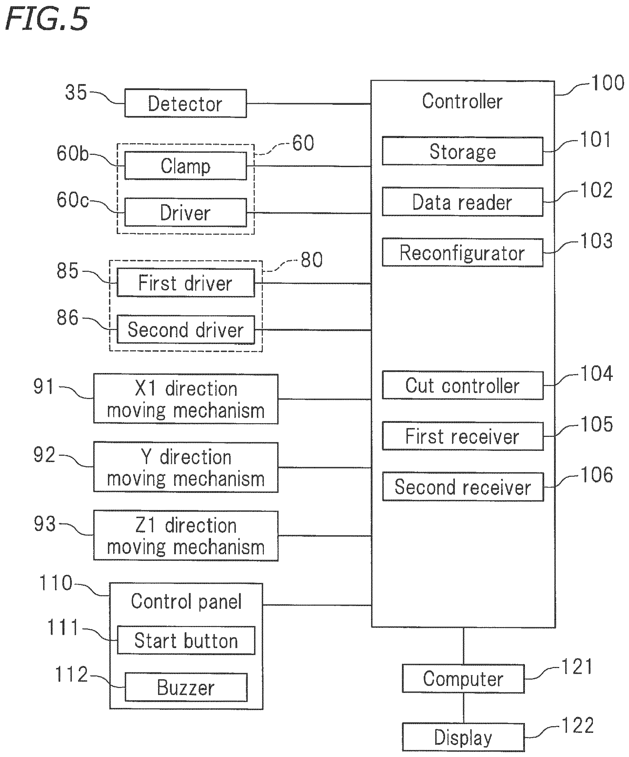

The rotation mechanism **80** supports the holder member **70**. The rotation mechanism **80** is a part of the moving mechanism for moving the main shaft **60** and the holder member **70** relative to each other. The rotation mechanism **80** includes a first rotation shaft **81**, a second rotation shaft **82**, a third rotation shaft **83**, a support member **84**, a first driver **85** and a second driver **86** (not shown in FIG. **4**; see FIG. **5**). As shown in FIG. **4**, the first rotation shaft **81** and the second rotation shaft **82** rotatably support the holder member **70** from the F1 direction and the Rr1 direction, respectively. The first rotation shaft **81** is connected to the first driver **85**, which is provided on the F1 direction side of the holder member **70**. There is no particular limitation on the first driver **85**, and it may be a motor, for example. The first driver **85** rotates the first rotation shaft **81** in the direction T1 about the X1 axis. By the drive of the first driver **85**, the holder member **70** rotates in the direction T1. The holder member **70** and the first driver **85** are supported by the support member **84**, which is formed in an L-letter shape. The support member **84** includes a first support portion **84a** and a second support portion **84b**. The first support portion **84a** extends in the X1-axis direction. The second support portion **84b** extends leftward from the rear edge of the first support portion **84a**. The front edge of the first support portion **84a** supports the first driver **85**. The second support portion **84b** supports the second rotation shaft **82.** The third rotation shaft **83** is connected to a central portion of the first support portion **84a**. The third rotation shaft **83** is connected to the holder member **70** at a position that corresponds to the center thereof in the X1-axis direction. The third rotation shaft **83** is connected to the second driver **86** not shown in FIG. **4** (see FIG. **5**). By the drive of the second driver **86**, the third rotation shaft **83** rotates the first support portion **84a** of the support member **84** in the direction T2 about the Y axis. By the rotation of the support member **84** in the direction T2, the holder member **70** also rotates in the direction T2.

As shown in FIG. **4**, the magazine **50** supports the holder member **70** via the third rotation shaft **83** and the support member **84** of the rotation mechanism **80**. The magazine **50** is formed in a box shape. A plurality of hole-shaped stockers **55** are formed on an upper surface **50a** of the magazine **50**. Each stocker **55** accommodates a tool **210.** In the present embodiment, the tool **210** is inserted in the stocker **55** with an upper end portion **210a** thereof exposed. With a plurality of stockers **55** provided on the magazine **50**, various types of tools **210** can be accommodated in the magazine **50**. In the present embodiment, ten stockers **55** are provided on the magazine **50**. The ten stockers **55** are provided on the magazine **50** in two rows arranged in the Y-axis direction, each row including five stockers arranged in the X1-axis direction.

The magazine **50** is secured on the X1 direction moving mechanism **91** (not shown in FIG. **4**; see FIG. **3**) provided on the right side. The X1 direction moving mechanism **91** is also a part of the moving mechanism for moving the main shaft **60** and the holder member **70** relative to each other. While there is no particular limitation on the configuration of the X1 direction moving mechanism **91**, it for example includes a motor, a screw feed mechanism, etc. The X1 direction moving mechanism **91** is connected to the controller **100** and is controlled by the controller **100**. By the drive of the X1 direction moving mechanism **91**, the holder member **70** moves in the X1 direction integral with the magazine **50.** In this process, the workpiece **200** held on the holder member **70** also moves in the X1 direction together with the holder member **70.**

Tools **210** are each a tool for cutting the workpiece **200.** Herein, bar-shaped tools **210** are used. As shown in FIG. **4**, the tool **210** is provided with a flange **210b.** Herein, the flange **210b** is shaped corresponding to the hole-shaped stocker **55**. When the tool **210** is accommodated in the stocker **55**, the flange **210b** is fitted into the stocker **55**. As shown in FIG. **4**, with the tool **210** inserted in the stocker **55**, the upper end portion **210a** above the flange **210b** protrudes from the stocker **55**. The upper end portion **210a** is clamped by the main shaft **60.** A cutter is provided below the flange **210b**. In the present embodiment, there are tools **210** that have cutters of various shapes. As the main shaft **60**, with the tool **210** clamped thereon, rotates about the Z1 axis, the tool **210** also rotates about the Z1 axis. The cutter of the tool **210**, which is rotating, comes into contact with the workpiece **200**, thus cutting the workpiece **200**.

The main shaft **60** rotates the tool **210**. As shown in FIG. **3**, the main shaft **60** includes a spindle **60a** and a driver **60c**, and the spindle **60a** includes a clamp **60b**. The spindle **60a** rotates about the Z1 axis. The clamp **60b** is provided at the lower end of the spindle **60a**, and the clamp **60b** rotates about the Z1 axis together with the rotation of the spindle **60a**. The driver **60c** rotates the spindle **60a**.

The clamp **60b** clamps the tool **210.** The clamp **60b** is provided at the lower end of the spindle **60a**. The clamp **60b** clamps the tool **210** by pinching the upper end portion **210a** of the tool **210** by a plurality of chucks, for example. Each chuck opens and closes by means of compressed air and spring force, for example. The compressed air is supplied by an external air compressor, or the like, connected to the main shaft **60**. The clamp **60b** is provided with an electromagnetic valve, etc., for controlling intake and discharge of compressed air. The electromagnetic valve, etc., are controlled by the controller **100.** The tool **210** rotates about the Z1 axis as the spindle **60a** rotates while being clamped by the clamp **60b**.

The driver **60c** rotates the spindle **60a.** The driver **60c** is a motor, for example. The driver **60c** is connected to the controller **100** and controlled by the controller **100**. In accordance with the control by the controller **100**, the driver **60c** rotates the spindle **60a** with specified timing and a specified number of revolutions.

As shown in FIG. **3**, the main shaft **60** is moved in the Y direction and the Z1 direction by the Y direction moving mechanism **92** and the Z1 direction moving mechanism **93**, respectively. The Y direction moving mechanism **92** and the Z1 direction moving mechanism **93** are each also a part of the moving mechanism for moving the main shaft **60** and the holder member **70** relative to each other. While there is no particular limitation on the configuration of the Y direction moving mechanism **92** and the Z1 direction moving mechanism **93**, they for example each include a motor, a screw feed mechanism, etc. The Y direction moving mechanism **92** and the Z1 direction moving mechanism **93** are each connected to the controller **100** and controlled by the controller **100**. By the drive of the Y direction moving mechanism **92** and the Z1 direction moving mechanism **93**, the main shaft **60** moves in the Y direction and the Z1 direction. In this process, the tool **210** clamped by the clamp **60b** also moves in the Y direction and the Z1 direction together with the main shaft **60**.

As shown in FIG. **1**, the cutting machine **10** of the present embodiment includes a control panel **110** on the front surface wall **22** of the housing **20**. The user uses the control panel **110** to operate the cutting machine **10**. The control panel **110** is electrically connected to the controller **100**. The controller **100** is provided in the back-side area **A1**. FIG. **5** is a block diagram of the cutting machine **10** of the present embodiment. As shown in FIG. **5**, the detector **35**, the clamp **60b** and the driver **60c** of the main shaft **60**, the first driver **85** and the second driver **86** of the rotation mechanism **80**, the X1 direction moving mechanism **91**, the Y direction moving mechanism **92**, the Z1 direction moving mechanism **93**, and the control panel **110** are electrically connected to the controller **100**. A computer **121** and a display **122** are communicably connected to the controller **100**.

The computer **121** is for example a computer for generating cut data to be executed on the cutting machine **10**, storing generated cut data, and transmitting cut data to the cutting machine **10**. Note however that the function of the computer **121** is not limited to the function described above, but some of the functions of the controller **100** to be described later may be implemented by the computer **121.** There is no limitation on whether a predetermined function is performed by the controller **100** built in the cutting machine **10** or by the computer **121.** The display **122** is a device that is connected to the computer **121** for displaying an operation screen, or the like.

The control panel **110** includes a start button **111** and a buzzer **112.** The start button **111** is a button to be depressed by the user when instructing to start a cut process, etc. The start button **111** is a mechanical button, for example. Note however that the start button **111** does not need to be a hardware button as described above, and may be a button on the screen displayed on the display **122**, for example. Moreover, a mechanical button and a button on the screen may both be provided so that the instruction can be given by using either one of them. The buzzer **112** gives a sound under a predetermined condition such as when there is an error, for example, to warn the user. The control panel **110** may further include indicators, etc., for indicating the statuses of other devices, but they will not be described herein.

As shown in FIG. **5**, the controller **100** includes a storage **101**, a data reader **102**, a reconfigurator **103**, a cut controller **104**, a first receiver **105**, and a second receiver **106.**

The storage **101** stores cut data. Upon receiving a piece of cut data to be executed from among a plurality of pieces of cut data stored in the computer **121**, for example, the storage **101** temporarily stores the cut data. Cut data includes various commands such as a command that specifies a tool **210** to be used and commands that instruct the movements of the X1 direction moving mechanism **91** to the Z1 direction moving mechanism **93** and the rotation mechanism **80.**

The data reader **102** reads out cut data. Herein, during a cut process, the data reader **102** successively reads out commands from the cut data.

The reconfigurator **103** reconfigures the read-out cut data. The reconfigurator **103** reconfigures commands of the cut data that has been read out by the data reader **102** according to predetermined rules. Commands are reconfigured so as to process any command that is included in the cut data and that cannot normally be executed by a cutting machine having such a hardware configuration as that of the cutting machine **10** of the present embodiment. The command reconfiguration will be described later.

The cut controller **104** performs a cut process based on cut data that has been reconfigured by the reconfigurator **103.** The cut controller **104** performs a cut process on the workpiece **200** by controlling the driver **60c** and the clamp **60b** of the main shaft **60**, the X1 direction moving mechanism **91** to the Z1 direction moving mechanism **93** and the first driver **85** and the second driver **86** of the rotation mechanism **80.**

The first receiver **105** receives, from the detector **35**, a door-open signal that indicates that the door **30** is open, and a door-closed signal that indicates that the door **30** is closed. As described above, the detector **35** includes a switch, or the like, for detecting whether or not the door **30** is closed, and detects the open/closed position of the door **30**. By using the first receiver **105** to receive a signal from the detector **35**, the controller **100** knows the open/closed position of the door **30.** As will be described later, in the present embodiment, the door **30** being closed is one of the conditions for starting a cut process. When the door **30** is no longer closed during a cut process, the cut process is discontinued.

The second receiver **106** receives a button-press signal indicating that the start button **111** has been depressed. In the present embodiment, the start button **111** being depressed is one of the conditions for starting a cut process. Note that the start button **111** as used herein also includes a re-start button that is used after a process is paused, and is not limited to the button that is used for initially instructing the start of a process. The button can be named in various ways.

There is no particular limitation on the configuration of the controller **100.** The controller **100** is a microcomputer, for example. There is no particular limitation on the hardware configuration of the microcomputer, but the microcomputer for example includes an interface (I/F) for receiving print data, etc., from an external device such as a host computer, a central processing unit (CPU) for executing instructions of a control program, a ROM (read only memory) storing a program to be executed by the CPU, a RAM (random access memory) to be used as a working area where the program is developed, and a storage device such as a memory for storing various data. As described above, the functions of various sections of the controller **100** do not need to be all implemented by hardware provided inside the housing **20**, but some of the functions may be implemented by the computer **121**.

With the cutting machine **10** of the present embodiment, when the user sets the workpiece **200** on the holder member **70** and sets the cut data to be executed on the computer **121**, a cut process is performed by a procedure as follows. First, the cut data is transmitted from the computer **121** to the storage **101** of the controller **100**, and the storage **101** stores the cut data. The cutting machine 10 is ready when the cut data is stored therein and predetermined conditions are met, e.g., the door-closed signal of the door 30 being received. When the start button **111** is depressed in the ready state, the cut process is started. Note that the cut data may be transmitted from the computer **121** to the storage **101** after the start button **111** is depressed.

When there is an instruction to start the cut process, the data reader **102** of the controller **100** reads the first one of the commands stored in the storage **101.** The first command is reconfigured by the reconfigurator **103** and executed by the cut controller **104**. If the command is a command that does not need to be modified, the command is executed as it is by the cut controller **104** without being modified by the reconfigurator **103**. The data reader **102** reads the second command after or during the execution of the first command. This similarly applies to all the commands to the last one.

Receiving commands that have been reconfigured by the reconfigurator **103**, the various sections of the cutting machine **10** perform operations as specified by the commands. For example, in response to a command for selecting a tool **210** to be used, the controller **100** controls the X1 direction moving mechanism **91** and the Y direction moving mechanism **92** so as to move the clamp **60b** in the U1 direction to a stocker **55** accommodating a specified tool **210**. Moreover, the controller **100** controls the Z1 direction moving mechanism **93** and the clamp **60b** so that the specified tool **210** is clamped by the clamp **60b**. If the specified tool **210** is already clamped by the clamp **60b**, this process may be omitted. If another tool **210** is clamped, a process of returning this other tool **210** to a stocker **55** may be performed first. For example, in response to a cut command, the controller **100** controls the X1 direction moving mechanism **91**, the Y direction moving mechanism **92** and the Z1 direction moving mechanism **93** to place the tool **210** and the workpiece **200** at positions specified by the command, and controls the rotation mechanism **80** so that the workpiece **200** takes a specified attitude. The driver **60c** of the main shaft **60** is instructed to rotate the spindle **60a** at a specified number of revolutions. Thereafter, the cut process is performed continuously or intermittently while varying the positional relationship between the workpiece **200** and the tool **210** and the attitude of the workpiece **200** (also the rotation speed of the spindle **60a** in some cases). During the process, a tool **210** is changed to another specified tool **210** as necessary before completing the cut process on the workpiece **200**.

As described above, the cutting machine **10** of the present embodiment is a cutting machine that does not have a workpiece changer and is capable of cutting only a single workpiece. Now, with a cutting machine that has a workpiece changer and is capable of cutting a plurality of workpieces, for example, workpiece stockers are assigned identification numbers, and a workpiece accommodated in a stocker having an identification number specified by a workpiece selection command of cut data is selected as the workpiece to be machined. In cut data, a workpiece selection command is written at least before a cut command, and the cut command is recognized as being a command that is associated with the workpiece selection command. A workpiece selection command may additionally include information such as the name of the workpiece (e.g., the name of the material of the workpiece). Thus, cut data generated for a cutting machine having the function of automatically replacing workpieces includes a workpiece selection command before a cut command. With conventional techniques, when such cut data including a workpiece selection command is transmitted to a cutting machine that is capable of cutting only a single workpiece, such as the cutting machine **10** of the present embodiment, the cutting machine issues an error and the process is not started. With conventional techniques, the process cannot be done by a cutting machine that is capable of cutting only a single workpiece unless the cut data is modified (e.g., by deleting a workpiece selection command) so as to be compatible with such a cutting machine.

In view of such a problem, the cutting machine **10** of the present embodiment, despite being a cutting machine that is capable of cutting only a single workpiece, is configured so that the cutting machine **10** can perform the process even when receiving cut data including a workpiece selection command. With the cutting machine **10** of the present embodiment, the controller **100** includes the reconfigurator **103** for reconfiguring commands. When the read-out cut data includes a workpiece selection command, the reconfigurator **103** reconfigures the cut data so that the first workpiece selection command is skipped. Therefore, even if a workpiece selection command is included in the cut data, the cut process can be started. Therefore, even with cut data including a workpiece selection command, it is possible to at least execute the first cut process. In other words, with the cutting machine **10** of the present embodiment, cut data including a workpiece selection command can be used without modifying the cut data. Note that with cut data that includes a workpiece selection command but only includes commands for one workpiece, it is possible to execute the cut data until the last command therein.

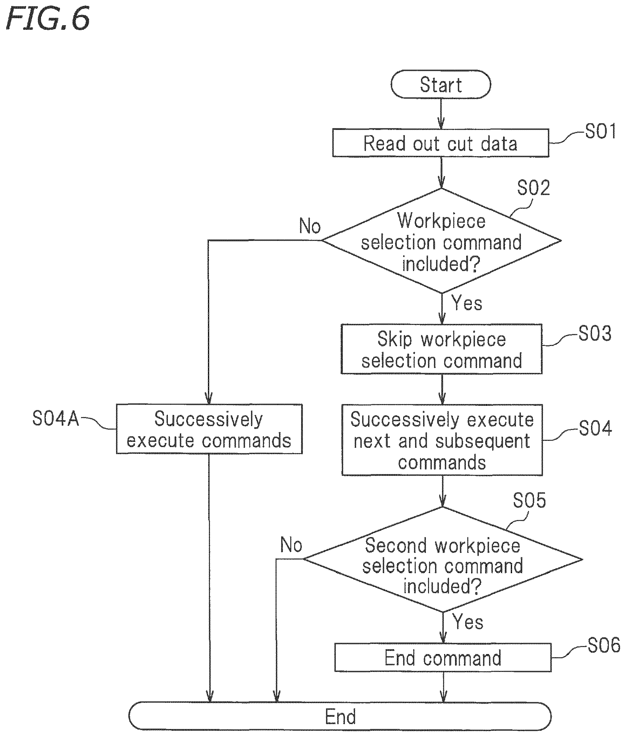

FIG. **6** is a flow chart showing a cut process performed by the cutting machine **10** of the present embodiment. As shown in FIG. **6**, the cutting machine **10** of the present embodiment reads out cut data in step S01. Then, in step S02, it is determined whether or not the read-out cut data includes a workpiece selection command. In practice, step S02 is a step of successively reading out and executing commands until a workpiece selection command is read out. Note however that a workpiece selection command is normally at the beginning of cut data, and a workpiece selection command, when included, is most likely read out first. When a workpiece selection command is included in step S02 (i.e., when step S02 is YES), the process proceeds to step S03. In step S03, cut data is reconfigured to skip the workpiece selection command. Then, in step S04, commands are executed successively starting from the command following the workpiece selection command. The commands as used herein include those relating to selecting tools **210** and cutting, for example. When step S02 is NO, the cut data is executed as it is without being modified (step S04A), and the process ends.

Step S05 is performed following step S04. In step S05, it is determined whether or not a second workpiece selection command is included. In practice, step S05 is a step of successively reading out and executing commands until the second workpiece selection command is read out. When step S05 is NO, i.e., when the cut data does not include the second workpiece selection command, the cut process ends. This is a case of cut data that includes a workpiece selection command but only includes commands for one workpiece. When step S05 is YES, the cut process is not executed for the second and subsequent workpiece selection commands, and an end command is issued in step S06.

As described above, the cutting machine **10** of the present embodiment includes the reconfigurator **103** for reconfiguring cut data so that the first workpiece selection command is skipped when receiving cut data that includes a workpiece selection command. Therefore, even with cut data that includes a workpiece selection command, the cutting machine **10** can execute the first cut process without halting with an error. In other words, cut data that includes a workpiece selection command can be used as it is with the present cutting machine **10**, which is a cutting machine that is capable of cutting only a single workpiece.

### (Second Embodiment)

The second embodiment is an embodiment where a plurality of cut processes that are included in cut data can all be performed. The present embodiment is similar to the first embodiment except for the configuration of the controller **100**. Some portions of the controller **100** are also the same as the first embodiment. Therefore, like members and portions are denoted by like reference signs, and redundant descriptions will be omitted or shortened.

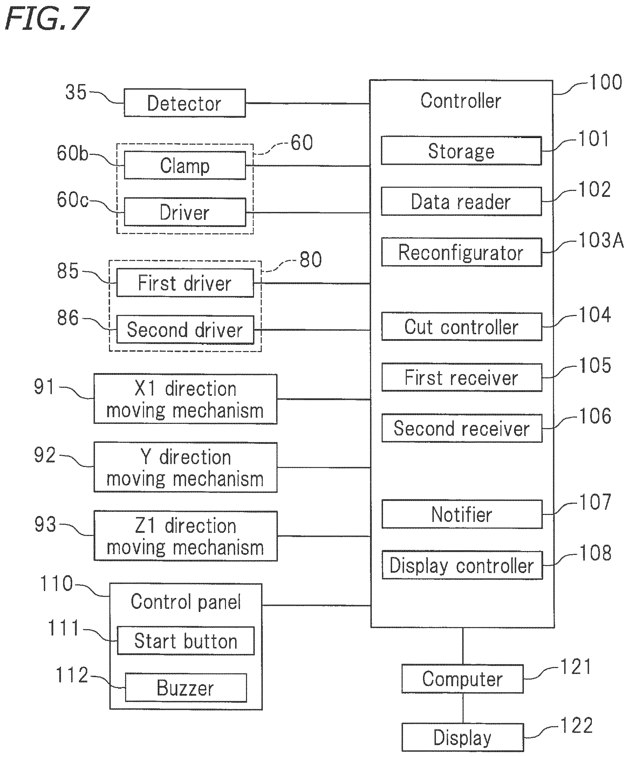

FIG. **7** is a block diagram of the cutting machine **10** of the present embodiment. As shown in FIG. **7**, the controller **100** of the present embodiment further includes a notifier **107** and a display controller **108**, and the specifications of a reconfigurator **103A** are different from those of the reconfigurator **103** of the first embodiment. The notifier **107** actuates the buzzer **112** when the reconfigurator **103A** adds a pause command and the pause command is executed. The pause command added by the reconfigurator **103A** will be described later. The display controller **108** displays, on the display **122**, information of a workpiece described in a workpiece selection command. Information of a workpiece described in a workpiece selection command is, for example, the number of the stocker, the name assigned to the workpiece, etc.

When the read-out cut data includes two or more workpiece selection commands, the reconfigurator **103A** of the present embodiment reconfigures the cut data so that the second and subsequent workpiece selection commands are skipped and a pause command and a resume command are added for each of commands associated with the second and subsequent workpiece selection commands. A resume command is a command to resume the cut process when a predetermined resumption condition is met. Note that also with the reconfigurator **103A** of the present embodiment, the first workpiece selection command is skipped as with the first embodiment.

As can be seen from the function of the reconfigurator **103A** described above, when receiving cut data that includes a plurality of workpiece selection commands, the cutting machine **10** of the present embodiment pauses for each of the second and subsequent workpiece selection commands. During the pause, the user, instead of a workpiece changer, can replace the workpiece with another. Then, on the cutting machine **10** side, a resume command is executed when a predetermined resumption condition such that it can be assumed that a workpiece has been replaced is met, thereby starting a cut process on the new workpiece. Since the workpiece selection commands are skipped, there will not be errors relating to workpiece selection commands. With the cutting machine **10** of the present embodiment, all of the cut processes included in the cut data can be performed on proper workpieces without modifying the cut data itself.

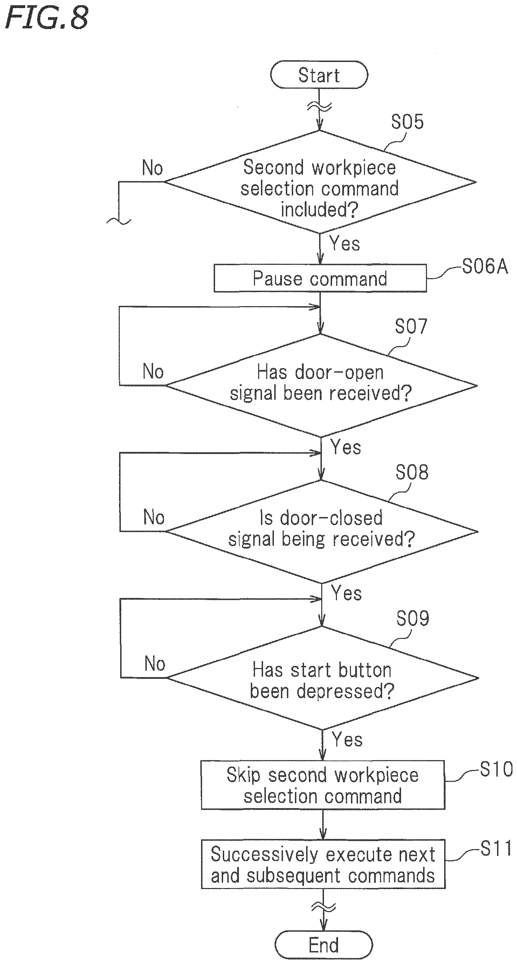

Specific processes will now be described. FIG. **8** is a flow chart showing a cut process performed by the cutting machine **10** of the present embodiment. Also in the present embodiment, the cut process performed on the first workpiece is the same as the first embodiment. Accordingly, FIG. **8** shows step S05 and subsequent steps of FIG. **6**. As shown in FIG. **8**, in step S05, when the process finds the second workpiece selection command (when step S05 is YES), a pause command is executed in step S06A and the cutting machine **10** pauses. In the subsequent steps S07 to S09, it is determined whether or not the resumption condition is met. In step S07, it is determined whether or not the door-open signal of the door **30** has ever been received by the first receiver **105**. When step S07 is NO, i.e., when the door **30** has not been opened once after the pause, the process returns to before step S07. That is, the process does not proceed. In practice, this is determined for example based on the state of an internal flag in the controller **100** that remains ON after the door-open signal of the door **30** is received once. When step S07 is YES and the process passes step S07, the process proceeds to step S08. In step S08, it is determined whether or not the door-closed signal of the door **30** is being received by the first receiver **105**. When step S07 is NO, i.e., when the door **30** has not been closed at that point in time, the process returns to before step S08. That is, the process does not proceed. In practice, this is determined for example based on the state of an internal flag in the controller **100** that remains ON only when the door-closed signal of the door **30** is being received. The process passing step S08 means that the door **30** has been opened and closed at least once and that the door **30** is closed at the point in time.

In steps S07 and S08 described above, it is confirmed that there has been an opportunity at least once for the door **30** to be opened and for the user to replace the workpiece **200** and that the door **30** is closed at the time of resumption. Moreover, in step S09, it is required as a resumption condition that the start button **111** be depressed. In step S09, when the start button **111** is depressed, the process proceeds to step S10, and the second workpiece selection command is skipped. Thereafter, in step S11, the next and subsequent commands are successively executed. That is, a cut process is executed on the second workpiece. Thereafter, the cut process is performed similarly for the third and subsequent workpiece selection commands (not shown in FIG. **8**). Note that step S10 of skipping a workpiece selection command may be executed immediately after step S05, for example.

The cutting machine **10** of the present embodiment has the function of assisting the user with the workpiece replacing operation. As described above, the controller **100** of the present embodiment includes the notifier **107**, which is configured to actuate the buzzer **112** when a pause command is executed. Thus, the user can know when to replace the workpiece. Note that while a buzzer is used as a sounding device for notifying the user of the pause in the present embodiment, there is no particular limitation on the sounding device and it may be any device as long as a sound is output.

The controller **100** of the present embodiment includes the display controller **108** and is configured so that information of a workpiece described in a workpiece selection command is displayed on the display **122.** Thus, the user can know what kind of a workpiece to use to replace the current workpiece. Note that information of a workpiece does not need to be displayed on the external display **122**, but it may be displayed on a display provided on the control panel **110**, for example. Although a list display, for example, is preferred, there is no limitation on the mode of display. Information of a workpiece on which the cut process is complete may be, for example, deleted from the screen or displayed in a different color so that it is visible to the user.

As described above, the cutting machine **10** of the present embodiment includes the reconfigurator **103A** configured so that when the read-out cut data includes two or more workpiece selection commands, the second and subsequent workpiece selection commands are skipped, and a pause command and a resume command for resuming the cut process when a predetermined resumption condition is met are added to each of commands that are associated with the second and subsequent workpiece selection commands. Thus, the user can perform an intended cut process on a plurality of workpieces while replacing workpieces.

The reconfigurator **103A** of the present embodiment sets the resumption condition so as to include a condition that the first receiver **105** receives a door-closed signal of the door **30** after receiving a door-open signal of the door **30.** Thus, before the resumption of a cut process, it is confirmed that the door **30** has been opened at least once so that the user had a chance to replace a workpiece and that the door **30** is closed at the time of resumption.

Moreover, the reconfigurator **103A** of the present embodiment sets the resumption condition so as to include a condition that the second receiver **106** receives a button-press signal of the start button **111** when the first receiver **105** has received a door-closed signal of the door **30** after receiving a door-open signal of the door **30.** With such a resumption condition, it is possible to check the user's intention and prevent the cutting machine **10** from being operated inadvertently.

Note that the cutting machine **10** may have a function such that when cut data includes a cut process that does not need to be executed, the cut process that does not need to be executed can be entirely skipped. That is, while a pause command is being executed, for example, the user may be allowed to skip the process up to the next workpiece selection command by performing a predetermined operation, e.g., depressing a skip button displayed on the display **122**, or the like.

### (Third Embodiment)

The third embodiment is an embodiment where the user can select any of the cut processes in cut data. Since the present embodiment is also similar to the first embodiment and the second embodiment except for the configuration of the controller **100**. Therefore, like members and portions are denoted by like reference signs, and redundant descriptions will be omitted or shortened.

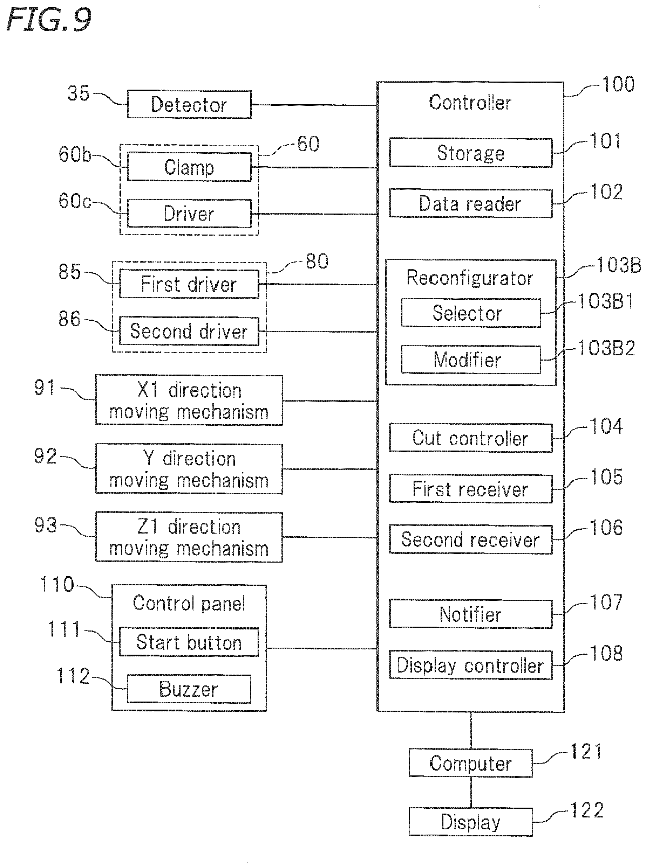

FIG. **9** is a block diagram of the cutting machine **10** of the present embodiment. As shown in FIG. **9**, a reconfigurator **103B** of the controller **100** of the present embodiment includes a selector **103B1** and a modifier **103B2.**

The selector **103B1** is configured so that when the read-out cut data includes a plurality of workpiece selection commands, any one or more workpiece selection command can be selected from among the plurality of workpiece selection commands so as to reconfigure the cut data so as to skip commands associated with the workpiece selection commands other than the selected workpiece selection commands. That is, the selector **103B1** reconfigures the cut data so as not to execute cut processes that are associated with the workpiece selection commands other than the selected workpiece selection commands. In other words, the selector **103B1** reconfigures cut data so as to only execute cut processes that are associated with the selected workpiece selection commands.

The modifier **103B2** reconfigures the cut data so that the selected workpiece selection commands are skipped, and when two or more workpiece selection commands are selected, a pause command and a resume command for resuming the cut process when a predetermined resumption condition is met are added to each of commands that are associated with the second and subsequent workpiece selection commands. That is, the one or more cut processes that are selected are handled as in the second embodiment. Specifically, the first cut process is executed except for the workpiece selection step, and a pause and resumption operation is inserted before the execution of each of the second and subsequent cut processes.

The selector **103B1** displays information of a workpiece on the display **122**, or the like, as does the display controller **108** of the second embodiment, for example. Note however that the selector **103B1** does not display a simple display screen, but displays an operation screen where a cut process to be executed can be selected on the screen. The cut processes to be selected are displayed as workpiece information. Note however that for each information displayed, information relating to the cut process may be added. For example, the name, or the like, assigned to each cut process may be displayed. The user operates the screen displayed by the selector **103B1** to select a cut process to be executed.

Thus, with the cutting machine **10** of the present embodiment, the user can select any cut process to be executed, and when two or more cut processes are selected, the user is given a chance to replace a workpiece, as in the second embodiment.

Cutting machines according to some embodiments have been described above. However, these embodiments are merely preferred examples, and are not intended to limit the cutting machine disclosed herein. For example, in the second embodiment described above, the cut process resumption condition includes a condition that the door **30** has been opened at least once and the door **30** is closed at the time of resumption, and the start button **111** has been depressed after closing the door **30**. However, the cut process resumption condition does not need to be these three conditions. For example, the depression of the start button **111** may be omitted from the resumption condition, or other conditions may be added thereto.

In the embodiments described above, the tool **210** is moved in the Y direction and the Z1 direction, and the workpiece **200** is moved in the X1 direction and rotated in two directions, i.e., the T1 direction and the T2 direction. However, the positional relationship between the tool **210** and the workpiece **200** is relative, and there is no limitation on how they are moved.

Moreover, the shape of the workpiece and the shape of the tool are not limited to those described above, and there is no limitation on the method by which the holder member holds a workpiece, etc. The cutting machine may further include a dust collector, or the like, for collecting dust that is from cut processes. The cutting machine is of a dry type in the embodiments described above, but it may be of a wet type using a coolant, or the like. There is no particular limitation on the mechanical configuration of the cutting machine.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A cutting machine capable of cutting only a single workpiece, the cutting machine comprising:
a main shaft having a spindle including a clamp that clamps a tool that cuts the workpiece;
a holder member that holds the workpiece;
a moving mechanism that moves the main shaft and the holder member relative to each other; and
a controller, wherein:
the controller includes:
a storage that stores cut data;
a data reader that reads out the cut data;
a reconfigurator that reconfigures the read-out cut data; and
a cut controller that controls the main shaft and the moving mechanism based on the reconfigured cut data; and
the reconfigurator reconfigures the cut data so that when the read-out cut data includes a workpiece selection command, a first workpiece selection command is skipped.

2. The cutting machine according to claim 1, wherein the reconfigurator reconfigures the cut data so that when the read-out cut data includes two or more workpiece selection commands, the second and subsequent workpiece selection commands are skipped, and a pause command and a resume command for resuming a cut process when a predetermined resumption condition is met are added to each of commands that are associated with the second and subsequent workpiece selection commands.

3. The cutting machine according to claim 2, comprising:
a housing that accommodates at least the main shaft and the holder member and that has an opening therein;
a door that is provided in the opening of the housing and that can be opened and closed; and
a detector that detects an open/closed position of the door, wherein:
the controller includes a first receiver that receives from the detector a door-open signal indicating that the door is open and a door-closed signal indicating that the door is closed; and
the reconfigurator sets the resumption condition so as to include a condition that the first receiver receives a door-closed signal of the door after receiving a door-open signal of the door.

4. The cutting machine according to claim 3, comprising a start button, wherein:
the controller includes a second receiver that receives a button-press signal indicating that the start button has been depressed; and
the reconfigurator sets the resumption condition so as to include a condition that the second receiver receives a button-press signal of the start button when the first receiver has received a door-closed signal of the door after receiving a door-open signal of the door.

5. The cutting machine according to any one of claims 2 to 4, comprising a buzzer, wherein:
the controller includes a notifier that actuates the buzzer when the pause command is executed.

6. The cutting machine according to any one of claims 1 to 5, comprising a display, wherein:
the controller includes a display controller that displays information of a workpiece described in a workpiece selection command on the display.

7. A cutting machine capable of cutting only a single workpiece, the cutting machine comprising:
a main shaft having a spindle including a clamp that clamps a tool that cuts the workpiece;
a holder member that holds the workpiece;
a moving mechanism that moves the main shaft and the holder member relative to each other; and
a controller, wherein:
the controller includes:
a storage that stores cut data;
a data reader that reads out the cut data;
a reconfigurator that reconfigures the read-out cut data; and
a cut controller that controls the main shaft and the moving mechanism based on the reconfigured cut data; and
the reconfigurator includes:
a selector configured so that when the read-out cut data includes a plurality of workpiece selection commands, any one or more workpiece selection command can be selected from among the plurality of workpiece selection commands so as to reconfigure the cut data so as to skip commands associated with the workpiece selection commands other than the selected workpiece selection commands; and
a modifier that reconfigures the cut data so that the selected workpiece selection commands are skipped, and when two or more workpiece selection commands are selected, a pause command and a resume command for resuming a cut process when a predetermined resumption condition is met are added to each of commands that are associated with the second and subsequent workpiece selection commands.
